# EUROPÄISCHE PATENTANMELDUNG

(11) **EP 1 067 329 A1**
(43) Veröffentlichungstag der Anmeldung: **10.01.2001**
(21) Anmeldenummer: 00202265.5
(22) Anmeldetag: 28.06.2000
(51) Int. Cl.: F21V 8/00

(54) **Bildschirm mit Hintergrundbeleuchtung**

(30) Priorität: 07.07.1999 DE 19931299
(71) Anmelder: Philips Corporate Intellectual Property GmbH, 52064 Aachen (DE); Koninklijke Philips Electronics N.V., 5621 BA Eindhoven (NL)
(72) Erfinder: Greiner, Horst, Philips Corporate I. P. GmbH, 52064 Aachen (DE)
(74) Vertreter: Volmer, Georg, Dipl.-Ing.

(57) **Zusammenfassung**

Die Erfindung beschreibt einen Bildschirm (1) mit Hintergrundbeleuchtung aus wenigstens einer Lichtquelle (4) und einer Lichtleiterplatte (2). Die Homogenität der Lichtverteilung wird einerseits durch Streuung der Lichtstrahlen an verspiegelten Einbuchtungen (10) in den Seitenflächen (9) der Lichtleiterplatte (2) und/oder durch Vertiefungen (11) mit vertikalen Wänden senkrecht zur Frontfläche (7) und/oder zur Rückfläche (8) der Lichtleiterplatte (2) erreicht. Die Vertiefungen (11) mit vertikalen Wänden verbessern auch die Auskoppelung des Lichtes zur Hintergrundbeleuchtung des Bildschirms (1).

## Beschreibung

Die Erfindung betrifft einen Bildschirm, insbesondere einen Flüssigkristallbildschirm, mit Hintergrundbeleuchtung aus wenigstens einer Lichtquelle und einer Lichtleiterplatte, welche eine dem Bildschirm zugewandte Frontfläche, eine Rückflache und Seitenflächen enthält. Die Erfindung betrifft auch eine Lichtleiterplatte, eine Frontfläche, eine Rückfläche und Seitenflächen aufweist.

Flüssigkristallbildschirme sind passive Anzeigesysteme, dass heißt sie leuchten nicht selber. Diese Bildschirme beruhen auf dem Prinzip, dass Licht die Schicht aus Flüssigkristallen passiert oder auch nicht. Dies bedeutet, dass eine externe Lichtquelle benötigt wird, um ein Bild zu erzeugen. In reflektiven Flüssigkristallbildschirmen wird das Umgebungslicht als externe Lichtquelle benutzt. Bei durchlässigen Flüssigkristallbildschirmen wird in einem Hintergrundbeleuchtungssystem künstliches Licht erzeugt.

Ein Hintergrundbeleuchtungssystem enthält eine Lichtquelle, die Licht zur Hintergrundbeleuchtung liefert, und eine Lichtleiterplatte mit einer Frontfläche, einer Rückflache und mehreren Seitenflächen. Eine Seitenfläche der Lichtleiterplatte, die benachbart zur Lichtquelle liegt, empfangt von dieser erzeugtes Licht, um dieses als Hintergrundbeleuchtungslicht zum Flüssigkristallbildschirm zu leiten. Weitere Komponenten des Hintergrundbeleuchtungssystems sind eine Reflexionsschicht, die durch die Rückfläche austretendes Licht in die Lichtleiterplatte zurückreflektiert und lichtstreuende Elemente, welche sich im Inneren der Lichtleiterplatte befinden.

Tritt ein von der Lichtquelle emittierter Lichtstrahl in die Lichtleiterplatte ein, läuft er normalerweise in der Längsrichtung der Lichtquelle weiter und zwar aufgrund wiederholter, interner Totalreflexion an der Front- und der Rückfläche. Trifft der Lichtstrahl auf das streuende Material, so wird die Bedingung für eine interne Totalreflexion zerstört, und der Laufpfad in Längsrichtung wird unterbrochen. Ein Teil des Lichtes streut zum Flüssigkristallbildschirm, um für seine Hintergrundbeleuchtung zu sorgen.

Zur Lichtstreuung werden unterschiedliche Prinzipien verwendet: Aus EP 0 590 511 A1 ist zum Beispiel eine Lichtleiterplatte bekannt, die Einkerbungen in der Front- und/oder Rückfläche aufweist. In den Patent Abstracts of Japan, Publikationsnummer 08248232 A, ist beispielsweise eine Lichtleiterplatte beschrieben, die Luftblasen bestimmter Größe enthält.

In der Praxis hat es sich als schwierig erwiesen, die räumliche Anordnung dieser streuenden Strukturen so zu bestimmen, dass in der Ebene der Frontfläche eine möglichst homogene Leuchtdichte auftritt. Dies gilt besonders bei Einsatz von mehr oder weniger punktförmigen Lichtquellen wie zum Beispiel Leuchtdioden. Zur Erzielung einer homogenen Verteilung müssen mehrere Leuchtdioden eingesetzt werden.

Der Erfindung liegt die Aufgabe zugrunde, ein Hintergrundsbeleuchtungssystem für Bildschirme mit verbesserter Homogenität der Lichtverteilung bereitzustellen.

Diese Aufgabe wird gelöst, durch einen Bildschirm mit Hintergrundbeleuchtung aus wenigstens einer Lichtquelle und einer Lichtleiterplatte, welche eine dem Bildschirm Zugewandte Frontfläche, eine Rückfläche und Seitenflächen enthält, dadurch gekennzeichnet, dass die Lichtleiterplatte zur Reflexion eines von der Lichtquelle emittierten Lichtstrahles bezüglich ihrer vertikalen Komponente und zur diffusen Streuung bezüglich ihrer anderen Komponenten verspiegelte Einbuchrungen in wenigstens einer Seitenfläche und/oder Vertiefungen mir vertikalen Wänden aufweist.

Als Folge der Einbuchtungen in den Seitenflächen beziehungsweise der Vertiefungen in der Lichtleiterplatte werden Lichtstrahlen in der xy-Ebene der Lichtleiterplatte willkürlich verteilt, während die z-Komponente bei der Reflexion erhalten bleibt. Das einfallende wird dadurch einheitlich über die Lichtleiterplatte verteilt.

Es ist bevorzugt, dass die verspiegelten Einbuchtungen regelmäßig und entlang aller Seitenflächen angebracht sind.

Da die Reflexion an den Seitenflächen der Lichtleiterplatte die Bedingung für die Totalreflexion der Front- und der Rückfläche nicht verletzt, kann das Licht durch Reflexion an den Rändern der Lichtleiterplatte effektiv über die Lichtleiterplatte verteilt werden.

Es kann bevorzugt sein, dass die Vertiefungen senkrecht zur Front- und/oder Rückfläche eingelassen sind.

Die Vertiefungen mit vertikalen Wänden verbessern auch die Homogenität der Lichtverteilung in der Lichtleiterplatte. Trifft ein Lichtstrahl auf die Wand einer solchen Vertiefung, so wird er entweder an der Mantelfläche oder der oberen Begrenzung der Vertiefung totalreflektiert oder er wird in die Vertiefung hineingebrochen. Nachdem der Lichtstrahl in die Vertiefung hineingebrochen wurde, kann er sie durch die senkrechte Mantelflache verlassen, wobei die z-Komponente des Lichtstrahles erhalten bleibt, während sich die xy-Richtung durch Brechung verändert. Das Licht wird homogen über die xy-Ebene der Lichtleiterplatte verteilt.

Es ist außerdem bevorzugt, dass die Vertiefungen die Lichtleiterplatte komplett oder nur zum Teil durchdringen.

Mit Hilfe der Vertiefungen kann die Auskoppelung des Lichtes in Richtung des Bildschirms verbessert werden. Trifft ein Lichtstrahl auf die Wand einer solchen Vertiefung, so wird er entweder an der Mantelfläche oder der oberen Begrenzung der Vertiefung total-reflektiert oder er wird in die Vertiefung hineingebrochen. Bei Austritt des Lichtstrahles durch die obere oder untere Begrenzung der Vertiefung wird der Lichtstrahl im allgemeinen aus der Lichtleiterplatte herausgestreut. Die Größe dieses Effekts und die Winkelverteilung des ausgekoppelten Lichtes hängen direkt vom Verhältnis der Höhe der Vertiefung zu seinem Querschnitt ab und können somit gut kontrolliert werden.

Es kann bevorzugt sein, dass sich am Boden der Vertiefungen streuende Elemente befinden.

Mit Hilfe der streuenden Elemente kann eine zusätzliche Verteilung der Lichtstrahlen erreicht werden. Tritt ein Lichtstrahl durch die senkrechte Mantelfläche seitlich in eine Vertiefung ein und trifft auf ein streuendes Element, so kann er derart gestreut werden, dass er durch die obere Öffnung der Vertiefung austritt oder durch die senkrechte seitliche Mantelfläche der Vertiefung wieder in die Lichtleiterplatte gelangt. Im letzteren Fall werden die Lichtstrahlen über die xy-Ebene der Lichtleiterplatte verteilt, während die Bedingung für eine Totalreflexion an der Frontfläche und der Rückfläche der Lichtleiterplatte erhalten bleibt.

Des weiteren betrifft die Erfindung eine Lichtleiterplatte mit einer Frontfläche, einer Rückfläche und Seitenflächen, die verspiegelte Einbuchtungen in wenigstens einer Seitenfläche und/oder Vertiefungen mit vertikalen Wänden aufweist.

Durch die verspiegelten Einbuchtungen in wenigstens einer Seitenfläche und/oder die Vertiefungen mit vertikalen Wänden werden einfallende Lichtstrahlen bezüglich der vertikalen Komponente der Lichtleiterplatte reflektiert und bezüglich der anderen Komponenten der Lichtleiterplatte diffus gestreut. Die Lichtstrahlen werden über die xy-Ebene der Lichtplatte verteilt und die Lichtleiterplatte weist eine homogene Verteilung des Lichtes auf.

Im folgenden soll ein Ausführungsbeispiel der Erfindung anhand dreier Figuren näher erläutert werden. Dabei zeigt
- Fig. 1:: einen vertikalen Querschnitt durch einen Bildschirm mit Hintergrundbeleuchtungssystem,
- Fig. 2:: eine Aufsicht auf eine Lichtleiterplatte mit Einbuchtungen an den Seitenflächen sowie mit Vertiefungen senkrecht zur Front- bzw. Rückfläche und
- Fig. 3:: einen horizontalen Querschnitt durch eine Lichtleiterplatte mit Einbuchtungen an den Seitenflächen und Vertiefungen senkrecht zur Front- bzw. Rückfläche.

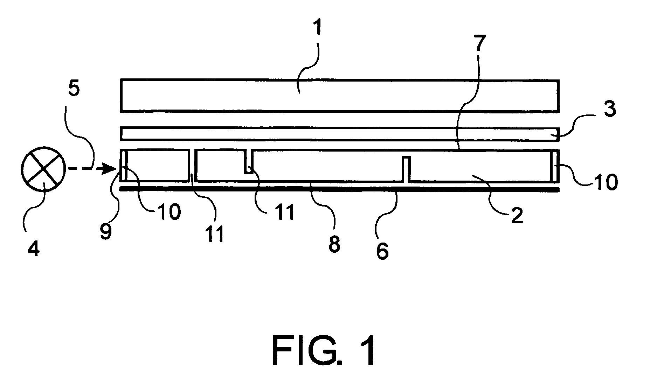

In Fig. 1 ist ein Bildschirm 1, zum Beispiel ein Flüssigkristallbildschirm, mit Hintergrundbeleuchtungssystem dargestellt. Das Hintergrundbeleuchtungssystem enthält eine Lichtquelle 4, beispielsweise eine Leuchtdiode oder eine Kaltkathodenlampe, und eine Lichtleiterplatte 2, die aus einem transparenten Kunststoff wie zum Beispiel Polymethylmethacrylat ist. Die Lichtleiterplatte 2 weist eine dem Bildschirm 1 zugewandte Front-fläche 7, eine Rückfläche 8 und mehrere Seitenflächen 9 auf. Über eine Seitenfläche 9, die der Lichtquelle 4 benachbart ist, gelangen die von der Lichtquelle 4 emittierten Lichtstrahlen 5 in der Lichtleiterplatte 2. Die Seitenflächen 9 der Lichtleiterplatte 2 weisen verspiegeke Einbuchtungen 10 mit beliebiger Höhe, beliebigem Durchmesser und beliebigem Querschnitt, beispielsweise dem Querschnitt eines Kreissektors auf Außerdem sind in der Lichtleiterplatte 2 senkrecht zur Frontfläche 7 und/oder zur Rückfläche 8 Vertiefungen 11 mit vertikalen Seitenwänden eingelassen. Diese Vertiefungen 11 werden beispielsweise mittels Ausstanzen hergestellt und können die Lichtleiterplatte 2 komplett oder nur zum Teil durchdringen. Zwischen Bildschirm 1 und Lichtleiterplatte 2 befindet sich eine Diffusionsschicht 3. Hinter der Rückfläche 8 ist eine Reflexionsschicht 6 angebracht.

Alternativ können sich am Boden von Vertiefungen, die die Lichtleiterplatte nicht ganz durchdringen, streuende Elemente befinden. Diese streuenden Elemente können beispielsweise transparente, nicht absorbierende Kügelchen mit einem Durchmesser bis zu 100 µm aus einem transparenten Kunststoff wie zum Beispiel Polymethylmethacrylat sein. Bei Vertiefungen, die die Lichtleiterplatte komplett durchdringen, kann die Reflexionsschicht 6 wenigstens im Bereich der Vertiefungen zusätzlich noch streuende Eigenschaften aufweisen.

Bei Verwendung einer Kaltkathodenlampe als Lichtquelle 4, kann die Lichtquelle 4 zusätzlich noch mit einer reflektierenden Abdeckung versehen werden.

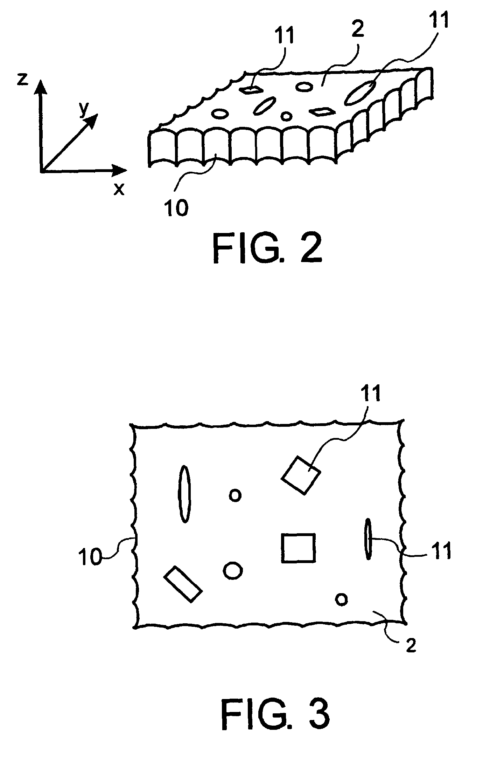

In Fig. 2 ist eine Lichtleiterplatte 2 gezeigt, die Einbuchtungen 10 an den Seitenflächen 9 der Lichtleiterplatte 2 sowie Vertiefungen 11 senkrecht zur Front- bzw. Rückfläche der Lichtleiterplatte 2 enthält. Die verspiegelten Einbuchtungen 10 sind in diesem Ausführungsbeispiel derart ausgeführt, dass sie einer vertikalen Wellung der Seitenflächen 9 entsprechen. Die Vertiefungen 11 mit vertikalen Wänden können beispielsweise einen kreisförmigen, einen elliptischen, einen rautenförmigen oder einen rechteckigen Querschnitt und einen beliebigen Durchmesser aufweisen.

In Fig. 3 ist ein vertikaler Querschnitt durch eine Lichtleiterplatte 2 gezeigt, die verspiegelte Einbuchtungen 10 an den Seitenflächen 9 der Lichtleiterplatte 2 sowie Vertiefungen 11 mit vertikalen Seitenwänden senkrecht zur Front- bzw. Rückfläche der Lichtleiterplatte 2 enthält.

Alternativ kann die Lichtleiterplatte 2 nur mit verspiegelten Einbuchtungen 10 in den Seitenflächen 9 der Lichtleiterplatte 2 oder nur mit Vertiefungen 11 senkrecht zur Frontfläche 7 und/oder der Rückfläche 8 mit vertikalen Wänden ausgeführt werden.

Die Hintergrundbeleuchtung eines Bildschirms 1 erfolgt folgendermaßen: Ein von der Lichtquelle 4 emittierter Lichtstrahl 5 tritt über eine Seitenfläche 9 in die Lichtleiterplatte 2 ein und läuft aufgrund wiederholter Totalreflexion an der Frontfläche 7 und der Rückfläche 8 in Längsrichtung der Lichtquelle 4 weiter. Trifft der Lichtstrahl 5 auf eine verspiegelte Einbuchtung 10 an einer Seitenfläche 9 der Lichtleiterplatte 2, wird der Lichtstrahl 5 bezüglich der xy-Ebene der Lichtleiterplatte 2 willkürlich gestreut, während die vertikale Komponente erhalten bleibt. Trifft ein Lichtstrahl 5 auf die Wand einer Vertiefung 11, so wird er entweder an der Mantelfläche oder der oberen Begrenzung der Vertiefung 11 totalreflektiert oder er wird in die Vertiefung 11 hineingebrochen. Verlässt der Lichtstrahl 5 eine Vertiefung 11 durch die senkrechte Mantelfläche bleibt die z-Komponente des Lichtstrahles 5 erhalten, während sich die xy-Richtung durch Brechung verändert. Bei Eintritt und Austritt des Lichtstrahles 5 durch die obere oder untere Begrenzung der Vertiefung 11 wird der Lichtstrahl 5 im allgemeinen aus der Lichtleiterplatte 2 herausgestreut. Dabei wird rückwärtig austretendes Licht durch die Reflexionsschicht 6 wieder in die Lichtleiterplatte 2 zurückreflektiert.

Befinden sich am Boden von Vertiefungen 11, die die Lichtleiterplatte 2 nicht ganz durchdringen, streuende Elemente, so wird ein durch die senkrechte Mantelfläche seitlich in eine Vertiefung 11 eintretender Lichtstrahl 5, wenn er auf ein streuendes Element trifft, derart gestreut, dass er durch die senkrechte seitliche Mantelfläche der Vertiefung 11 wieder in die Lichtleiterplatte 2 gelangt oder durch die obere Öffnung der Vertiefung 11 austritt.

Besitzt die Reflexionsschicht 6 im Bereich von Vertiefungen 11, die die Lichtleiterplatte 2 ganz durchdringen, reflektierende und streuende Eigenschaften, wird ein nach hinten austretender Lichtstrahl 5 derart abgelenkt, dass er wieder in die Lichtleiterplatte 2 gelangt oder durch die obere Öffnung der Vertiefung 11 austritt.

Die Auskoppelung des Lichtes zur Hintergrundbeleuchtung des Bildschirms 1 kann auch durch eine Strukturierung, beispielsweise aufgedruckte Punkte aus weißer Farbe oder geeignete Vertiefungen und Oberflächenstrukturen, der Frontfläche 7 oder der Rückfläche 8 erfolgen.

Durch die Diffusionsschicht 3 gelangen die ausgekoppelten Lichtstrahlen 5 schließlich zum Bildschirm 1, um für dessen Hintergrundbeleuchtung zu sorgen.

## Patentansprüche

1. Bildschirm (1) mit Hintergrundbeleuchtung aus wenigstens einer Lichtquelle (4) und einer Lichtleiterplatte (2), welche eine dem Bildschirm (1) zugewandte Frontfläche (7), eine Rückfläche (8) und Seitenflächen (9) enthält,
dadurch gekennzeichnet,
dass die Lichtleiterplatte (2) zur Reflexion eines von der Lichtquelle (4) emittierten Lichtstrahles (5) bezüglich ihrer vertikalen Komponente und zur diffusen Streuung bezüglich ihrer anderen Komponenten verspiegelte Einbuchtungen (10) in wenigstens einer Seitenfläche (9) und/oder Vertiefungen (11) mit vertikalen Wänden aufweist.

2. Bildschirm (1) mit Hintergrundbeleuchtung nach Anspruch 1,
dadurch gekennzeichnet,
dass die verspiegelten Einbuchtungen (10) regelmäßig und entlang aller Seitenflächen (9) angebracht sind.

3. Bildschirm (1) mit Hintergrundbeleuchtung nach Anspruch 1,
dadurch gekennzeichnet,
dass die Vertiefungen (11) senkrecht zur Front- und/oder Rückfläche eingelassen sind.

4. Bildschirm (1) mit Hintergrundbeleuchtung nach Anspruch 1,
dadurch gekennzeichnet,
dass die Vertiefungen (11) die Lichtleiterplatte (2) komplett oder nur zum Teil durchdringen.

5. Bildschirm (1) mit Hintergrundbeleuchtung nach Anspruch 1,
dadurch gekennzeichnet,
dass sich am Boden der Vertiefungen (11) streuende Elemente befinden.

6. Lichtleiterplatte (2) mit einer Frontfläche (7), einer Rückfläche (8) und Seitenflächen (9),
dadurch gekennzeichnet,
dass die Lichtleiterplatte (2) verspiegelte Einbuchtungen (10) in wenigstens einer Seitenfläche (9) und/oder Vertiefungen (11) mit vertikalen Wänden aufweist.
